# EUROPEAN PATENT SPECIFICATION

(11) **EP 2 927 038 B1**
(45) Date of publication and mention of the grant of the patent: **30.11.2016**
(21) Application number: 14163097.0
(22) Date of filing: 01.04.2014
(51) Int. Cl.: B60K 15/03, F02M 37/02, B60K 13/04, F04F 1/04, F04F 1/06

(54) **Vehicle supply system and use of a thermo-hydraulic unit in a vehicle**
Fahrzeugversorgungssystem und Verwendung einer thermo-hydraulischen Einheit in einem Fahrzeug
Système d'alimentation de véhicule et utilisation d'une unité thermo-hydraulique dans un véhicule

(43) Date of publication of application: 07.10.2015
(73) Proprietor: Inergy Automotive Systems Research (Société Anonyme), 1120 Bruxelles (BE)
(72) Inventor: de Man, Pierre, B-1090 Brussels (BE); Dougnier, François, B-3190 Boortmeerbeek (BE); van Schaftingen, Jules-Joseph, B-1300 Wavre (BE)
(74) Representative: Remy, Vincent Noel Paul

(56) References cited:
- DE-A1-102010 020 200
- GB-A- 2 414 455
- JP-A- H07 218 160
- US-A1- 2012 152 489

## Description

### Field of Invention

The invention relates to a vehicle supply system for supplying a fluid under pressure, and in particular for transferring and pressurizing a fluid. Also the invention relates to the use of a thermo-hydraulic unit in a vehicle.

### Background

Currently mechanical pumps are being used for SCR applications and for fuel applications.

From the literature pulsating heat pipes have been known for a long time (see e.g. US 2012/0152489 A1). Such pipes contain a hot portion, also called evaporator section, and a cold portion, also called condenser section. The fluid in the tube is vaporized in the evaporator section, the created vapour is condensed in the condenser section, and the condensed liquid is transported back to the evaporator section. In that way heat is transported from the evaporator section to the condenser section. Such pipes have been used for the removal of high localized heat fluxes to provide the necessary level of temperature uniformity across components that need to be cooled. Also, there exist so-called open oscillatory heat pipes. Such pipes have a closed end located in a hot source and an open end located in a water tank.

A vehicle supply system according to the preamble of claim 1 is known from GB 2 414 455 A.

### 20 Summary

The object of embodiments of the invention is to provide an improved vehicle supply system for supplying a fluid under pressure, which allows reducing or eliminating the need for mechanical pumping.

According to a first aspect of the invention there is provided a vehicle supply system as defined in claim 1. It comprises:
a reservoir for storing a fluid, typically a fluid that is primarily in liquid form and partially in vapour form; and a supply circuit arranged for being in fluid communication with said reservoir. The supply circuit comprises a thermo-hydraulic section configured for generating a temperature difference between a first portion and a second portion of said thermo-hydraulic section, said temperature difference being capable of causing evaporation (total or partial evaporation) in said first portion and of causing condensation in said second portion such that an oscillating flow is generated between said first portion and said second portion. The supply circuit is further configured for using said oscillating flow for sucking fluid from said reservoir.

Embodiments of the present invention are based on the insight that part of the supply circuit containing the fluid to be pumped may be submitted to heating and another part may be submitted to cooling, resulting in alternating vaporisation and condensation and pressure fluctuations. These pressure fluctuations are being used to pump and transfer fluids through the supply circuit. In that way the need for a mechanical pump in the supply system for transferring high vapour pressure fluids is eliminated or at least simplified in the sense that a less powerful mechanical pump may be used. Further, energy can be saved by using available hot /cold sources (energy recovery). The system of the present invention is well adapted for supplying fluids with high vapour pressure, for which conventional pumping means (such as gear pump) are not well adapted.
The idea of the present invention is to take advantage of the high volatility of the fluid to be pumped, so as to reach high flow rates. In a preferred embodiment, the volatility of the fluid to be pumped has higher volatility than water.

In a preferred embodiment the supply circuit comprises a valve between an inlet of the supply circuit and the thermo-hydraulic section, said valve being configured for blocking a flow from the thermo-hydraulic section to the reservoir and for allowing a flow from the reservoir to the thermo-hydraulic section. This valve may be e.g. a check valve. Due to the presence of such a valve the fluid vaporizing in the thermo-hydraulic section cannot flow back to the reservoir, increasing the pressure in the supply circuit.

In a preferred embodiment the supply circuit comprises a buffer for storing the fluid pressurized by the thermo-hydraulic unit, and optionally at least one control valve for controlling the pressure in the buffer.

In a preferred embodiment the supply circuit further comprises an injector configured for injecting or spraying pressurized fluid from the supply circuit into a fluid consuming device. Preferably the injector is connected to the buffer.

In a possible embodiment the buffer is located downstream of the thermo-hydraulic section. In such an embodiment a first heated portion of the thermo-hydraulic section is typically located upstream of a second cooled portion of the thermo-hydraulic section. In another possible embodiment the buffer is located upstream of the thermo-hydraulic section. In such an embodiment a first heated portion of the thermo-hydraulic section is typically located downstream of a second cooled portion of the thermo-hydraulic section.

In a preferred embodiment the supply circuit comprises a loop circuit. More preferably, the loop circuit comprises a first control valve upstream of a buffer for storing pressurized fluid and a second control valve downstream of the buffer, said first and said second control valves being configured for controlling the pressure in the buffer. The loop circuit may further comprise a valve for controlling the flow in the loop circuit.

The reservoir may be connected to the supply circuit, in particular the loop circuit via a connecting tube comprising a valve for controlling the flow to the supply circuit.

In an exemplary embodiment the reservoir is any one of the following: a buffer reservoir, a tank, a decomposition unit, a buffer containing aqua-ammonia, a chemical conversion unit producing aqua-ammonia, a gasoline or diesel tank, a urea tank. In an embodiment, the reservoir is a fuel tank. In an alternative embodiment, the reservoir may be a tank of an ammonia precursor, such as for instance urea or a concentrated urea solution of at least 10% urea up to the eutectic 32.5 wt% urea in water, or a mixture of effluents known as aqua ammonia, which typically comprises ammonium hydroxide, residue of ammonia precursor and eventually other ammonium salts, such as ammonium bicarbonate (NH₄HCO₃).

According to another aspect of the invention there is provided a thermo-hydraulic section for use in a vehicle supply system comprising a tube with an inlet for receiving fluid from a reservoir, wherein a heating device is arranged for heating the tube at a first location for evaporating said fluid at said first location, and a cooling device is arranged for cooling the tube at a second location for condensing said evaporated fluid at said second location. The heating devices may comprise e.g. any one of the following: exhaust pipe, engine block, engine cooling system, fuel cell cooling system. The cooling device may comprise any one of the following: environment, air conditioning system. In that way the available heat source(s)/cooling source(s) in a vehicle may be advantageously used for pumping a fluid. If the fluid is aqua ammonia, then the heating device may e.g. be configured for heating the fluid up to a temperature higher than 80 degrees Celsius, and the pressure in the supply circuit may rise to a few bars.

According to yet another aspect of the invention there is provided a thermo-hydraulic section for use in a vehicle supply system comprising a chamber and at least one tube section, said chamber being in fluid communication with a first end and a second end of each tube section, wherein the thermo-hydraulic section is configured for generating a temperature difference between a first portion of the tube section and a second portion of the tube section, said temperature difference being capable of causing evaporation in said first portion and of causing condensation in said second portion.

In a first particular embodiment, said first portion can be further away from said chamber than said second portion. In a second particular embodiment, said second portion can be further away from said chamber than said first portion.
If a plurality of tube sections is used there is preferably provided a fluid communication between the first portions of the plurality of tube sections such that the plurality of tubes oscillates in a synchronised way. The heating devices may comprise e.g. any one of the following: exhaust pipe, engine block, engine cooling system, fuel cell cooling system. The cooling device may comprise any one of the following: environment, air conditioning system. In that way the available heat source(s)/cooling source(s) in a vehicle may be advantageously used for pumping a fluid.

According to an aspect, the invention relates to the use of a thermo-hydraulic section in a vehicle supply system according to any one of the embodiments above.

According to an aspect, the invention relates to the use of any one of the following heating devices in a thermo-hydraulic section of a vehicle supply system: exhaust pipe, engine block, engine cooling system, fuel cell cooling system; and to the use of any one of the following cooling devices in a thermo-hydraulic section of a vehicle supply system: environment, air conditioning system.

According to an aspect, the invention relates to the use of a vehicle supply system according to any one of the embodiments above for any one of the following applications:
- pumping of aqua ammonia or hydrolysis effluents from the reservoir to an exhaust pipe;
- pumping of aqua ammonia or hydrolysis effluents from the reservoir to an ammonia-hydrogen converter, to a fuel cell or to another buffer;
- pumping of gasoline from the reservoir to the engine.

The features set out above for the first aspect of the invention may also be applied to the other aspects.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a diagram illustrating a first embodiment of a vehicle supply system including a thermo-hydraulic unit;
Figure 2A is a diagram illustrating a first embodiment of a thermo-hydraulic unit;
Figures 2B and 2C are variants of the embodiment of figure 2A;
Figure 3 is a diagram illustrating a second embodiment of a thermo-hydraulic unit;
Figure 4 is a diagram illustrating a third embodiment of a thermo-hydraulic unit;
Figure 5 illustrates a second embodiment of a vehicle supply system including a thermo-hydraulic unit and a jet pump;
Figure 6 illustrates a third embodiment of a vehicle supply system including a return line to the tank;
Figure 7 illustrates a fourth embodiment of a vehicle supply system;
Figure 8 illustrates a fifth embodiment of a vehicle supply system including a pressurizing system in the tank;
Figure 9 illustrates a sixth embodiment of a vehicle supply system including a separator unit between the tank and the loop circuit;
Figure 10 is a diagram illustrating a possible implementation for the separator unit and the thermo-hydraulic unit of the embodiment of figure 9;
Figure 11 illustrates a seventh embodiment of a vehicle supply system including a buffer upstream of the thermo-hydraulic unit; and
Figure 12 illustrates an eighth embodiment of a vehicle supply system.
Figure 13 illustrates a ninth embodiment of a vehicle supply system.

### Description of embodiments

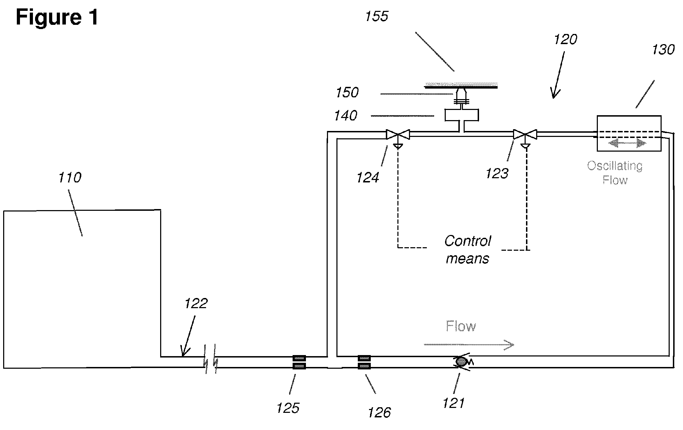

In the embodiment of figure 1, the vehicle supply system comprises a tank 110 and a supply circuit 120 in fluid communication with the tank 110. A fluid is contained in the tank 110. The tank can be e.g. a buffer containing aqua-ammonia, a chemical conversion unit producing aqua-ammonia, a gasoline or diesel tank, a urea tank, etc. The fluid from the tank is fed, e.g. by gravity, to the supply circuit 120. In this embodiment, the supply circuit 120 is a loop circuit which is connected through a tube 122 to a bottom part of the tank 110. A chemical conversion (i.e. decomposition) unit producing aqua-ammonia is described in more detail in patent application EP 13182919.4 in the name of the Applicant, the content of which is incorporated by reference in the present application.

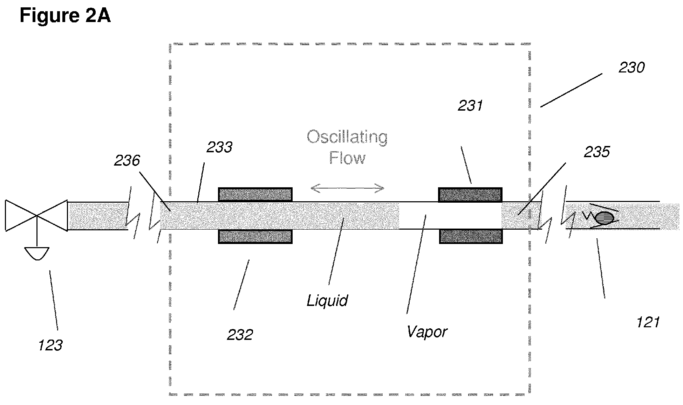

The loop circuit 120 comprises a thermo-hydraulic unit 130 configured for causing an oscillating flow due to the action of the thermo-hydraulic unit 130. The thermo-hydraulic unit 130 comprises a heating device and a cooling device for causing the oscillating flow. The heating device can be e.g. an exhaust pipe of an internal combustion engine, the internal combustion engine itself, a derivation or the main stream of the cooling circuit of an internal combustion engine or of a fuel cell, etc. Preferably, the heating device is a component that heats up and needs to be cooled, or a component from which heat may be removed advantageously. The cooling device of the thermo-hydraulic unit can be e.g. the environment, or a derivation or the main stream of an air conditioning system. The cooling device may further comprise known heat transfer devices and thermo-insulating materials to enhance the cooling. A number of possible embodiments for the thermo-hydraulic unit will be elucidated below referring to figures 2A-2C, 3 and 4. In the thermo-hydraulic unit 130 successive vaporisation and condensation occurs in the heating and cooling devices, causing the oscillating flow. The fluid vaporizing in the heating device is forced to flow towards the cooling device due to the presence of a check valve 121 in the loop circuit 120, between the connection tube 122 and the thermo-hydraulic unit 130. The check valve 121 is configured for blocking the flow from the thermo-hydraulic unit 130 to the connecting tube 122, whilst allowing a flow from the tube 122 to the thermo-hydraulic unit 130. Further, the fluid vaporising in the heating device will pressurize the fluid in the loop 120 due to the presence of valves 125 and 126. A first valve 125 is provided in connecting tube 122, and a second valve 126 is provided in the loop circuit 120, between connecting tube 122 and check valve 121. This vaporization will also pressurize the fluid in the buffer 140, which is arranged in fluid communication with the loop circuit 120. Next, the fluid condenses in the cooling device generating a relative vacuum in the heating device, so that fluid from the tank 110 is sucked again in the loop circuit 120. Valve 125 is used to control the flow feeding the loop circuit 120, while valve 126 is used to control the flow within the loop.

In order to be able to control the pressure inside the buffer 140, there is provided a first control valve 123 between the thermo-hydraulic unit 130 and the buffer 140, and a second control valve 124 between the buffer 140 and the connecting tube 122. The buffer 140 is connected to an injector 150 for injecting pressurized fluid in a fluid consuming device 155. The fluid consuming device 155 can be e.g. an exhaust pipe, an internal combustion engine, a fuel cell, a chemical convertor or a buffer. The fluid can be e.g. aqua-ammonia, effluents of urea hydrolysis, gasoline, or other fuels.

Figure 2A illustrates a first embodiment of a thermo-hydraulic unit 230. The thermo-hydraulic unit 230 is fed by fluid coming from the tank through check valve 121, see also figure 1. A heating device 231 and a cooling device 232 are successively placed on a manifold to induce a fluid oscillating due to the successive vaporisations and condensations occurring in the heating and cooling devices 231, 232. Due to the presence of the check valve 121 the fluid vaporizing in the heating device 231 is forced to flow towards the cooling device 232, and pressurizes the fluid contained in the loop circuit due to the presence of valves 125 and 126, see also figure 1. The fluid then condenses in the cooling device 232, generating a relative vacuum, so that fluid from the tank is sucked again into the loop circuit. In this embodiment, the thermo-hydraulic unit 230 is simply formed by a tube section with an inlet 235 and an outlet 236, and the heating device and cooling device 231, 232 are arranged for heating and cooling successive portions of the tube section. The cooling device 232 is arranged downstream of the heating device 231.

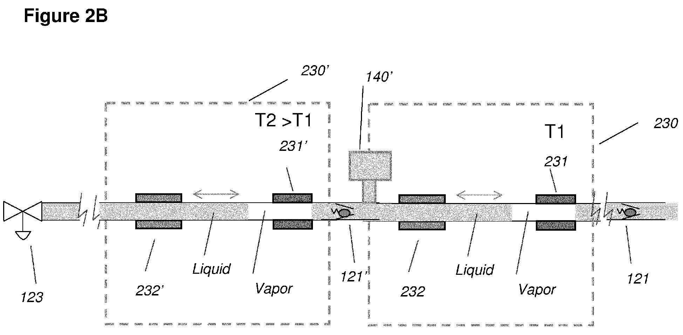

Figure 2B illustrates a variant of the embodiment of figure 2A in which two thermo-hydraulic units 230, 230' are placed in series. In the embodiment of figure 2B the first thermo-hydraulic unit 230 has a cooling device 232 and a heating device 231 configured for operating at a first temperature T1. The second thermo-hydraulic unit 230' located downstream of the first thermo-hydraulic unit 230 has a cooling device 232' and a heating device 231' configured for operating at a second temperature T2 which is higher than T1. Between the first thermo-hydraulic unit 230 and the second thermo-hydraulic unit 230' there may be provided an additional check valve 121' and an additional buffer 140'. In that way there can be produced a first pressure P1 in the liquid leaving the first thermo-hydraulic unit 230, and a second pressure P2 higher than pressure P1 in the liquid leaving the second thermo-hydraulic unit 230'.

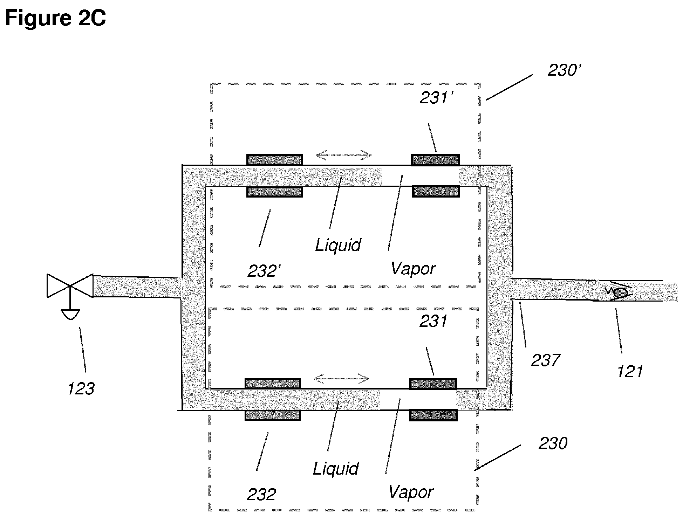

Figure 2C illustrates a variant of the embodiment of figure 2A in which two thermo-hydraulic units 230, 230' are placed in parallel. In the embodiment of figure 2C the first thermo-hydraulic unit 230 has a heating device 231 and a cooling device 232. The second thermo-hydraulic unit 230' located downstream of the first thermo-hydraulic unit 230 has a heating device 231' and a cooling device 232'. In a possible embodiment additional measures may be taken to synchronize the first thermo-hydraulic unit 230 and the second thermo-hydraulic unit 230'. One such measure may be placing the heating device 231 and the heating device 231' close to or at the split point 237 where two parallel lines lead to the two thermo-hydraulic units 230, 230'. The skilled person understands that many variations of the parallel and series combinations of thermo-hydraulic sections 230 are possible within the concept of the invention.

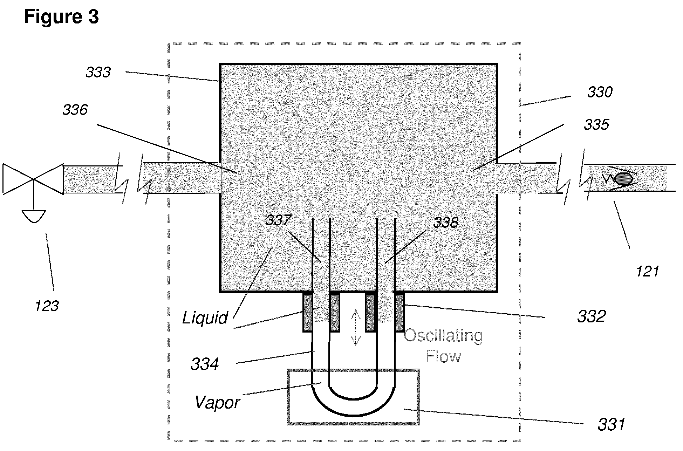

Figure 3 illustrates a second embodiment of a thermo-hydraulic unit. The thermo-hydraulic unit 330 comprises a chamber 333 with an inlet 335 and an outlet 336. The thermo-hydraulic unit 330 further comprises one or more bent tube sections 334 each having a first end 337 and a second end 338, which are in fluid communication with the chamber 333. Further, the thermo-hydraulic unit 330 comprises a heating device 331 and cooling device 332. The heating device 331 is arranged for heating the tube section 334 at a first location, and the cooling device 332 is arranged for cooling the tube section at a second location. The first heated location is further away from the chamber 333 than the second cooled location. In this embodiment, the flow induced by successive vaporisation and condensation cycles is restricted to the bent tube section 334. The pressure variations induced by the flow oscillating in phase in the bent tube section are transmitted to the chamber 330. The flow pumping effect is obtained in a similar way as in the embodiment of figure 2 due to the presence of check valve 121. Although only one tube section 334 is illustrated, the skilled person understands that several tubes working in parallel may be provided in order to increase the amplitude of the pressure variations in the chamber 333. In such an embodiment, the bent tube sections are preferably in fluid communication with each other so as to oscillate in phase.

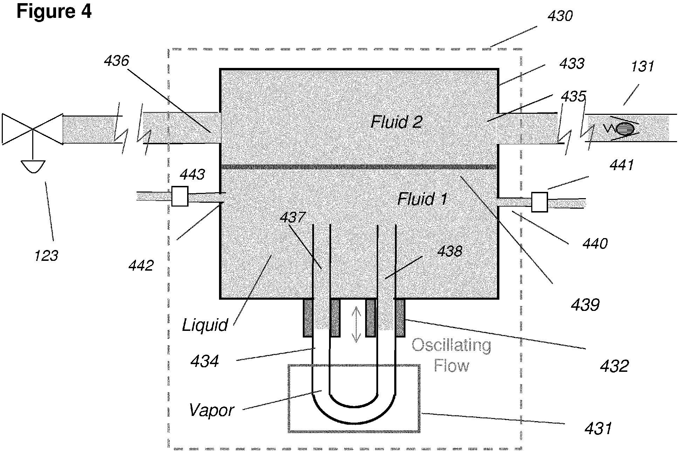

Figure 4 illustrates a third embodiment of a thermo-hydraulic unit. The embodiment of figure 4 is similar to the embodiment of figure 3 in that the thermo-hydraulic 430 comprises a chamber 433 and at least one bent tube section 434 having a first end 437 and a second end 438 which are in fluid communication with the chamber 433. The chamber has an inlet 435 for receiving fluid from the tank, and an outlet 436 for feeding the buffer with a pressurized fluid. The thermo-hydraulic unit 430 further comprises a heating device 431 and a cooling device 432.

The chamber 433 is divided into two volumes separated by a flexible membrane 439. Instead of a flexible membrane, also a piston may be used. The volume of the chamber 433 that is in fluid communication with the tube section 434 may contain fluid 1 which is different from fluid 2 contained in the loop circuit. The separation of fluid 1 from fluid 2 allows guaranteeing stable chemical properties of fluid 1. Fluid 1 and fluid 2 can be identical or different. Optionally, an input port 440 and an output port 442 may be added to the "fluid 1" chamber volume in order to allow the filling or replacement of fluid 1. By using a single fluid, i.e. when fluid 1 is identical to fluid 2, these ports 440, 442 can be connected to the main flow loop, upstream and downstream of the thermo-hydraulic unit 430. In that way also fluid 1 can be replaced regularly avoiding that the chemical and/or physical properties which are needed for causing a good oscillating flow degrade over time. The flow through the input and output ports 440, 442 may be adjusted by respective valves or control valves 441, 443.

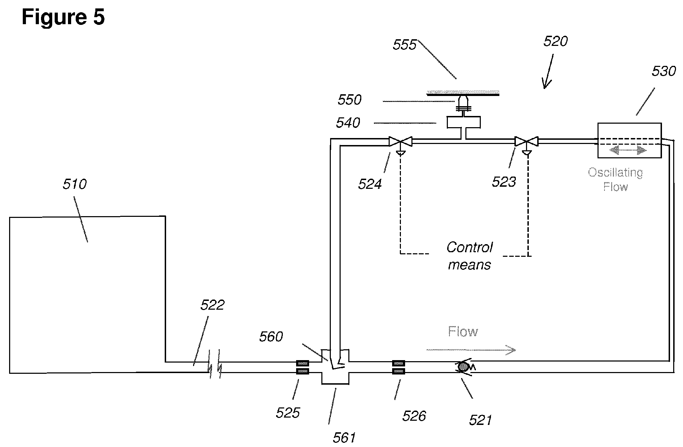

Figure 5 illustrates a further embodiment of a vehicle supply system according to the invention. The vehicle supply system comprises a tank 510 and a loop circuit 520 which is in fluid communication with the tank through a connecting tube 522. The tube 522 comprises a valve 525. Starting from the valve 525 and looking into the flow direction in the loop circuit 520, the loop circuit 520 comprises a valve 526, a check valve 521, a thermo-hydraulic unit 530, a first control valve 523, and a second control valve 524. Between the first and second control valves 523, 524 there is provided a buffer 540 with an injector 550 for injecting fluid into a fluid consuming device 555. In this embodiment, a jet pump 560 is added to facilitate the suction of fluid into the loop 520. A further buffer 561 is arranged between valve 525 and valve 526 to facilitate the feeding of the loop circuit 520. In an alternative non-illustrated embodiment, the buffer 561 could also be provided between valve 526 and check valve 521.

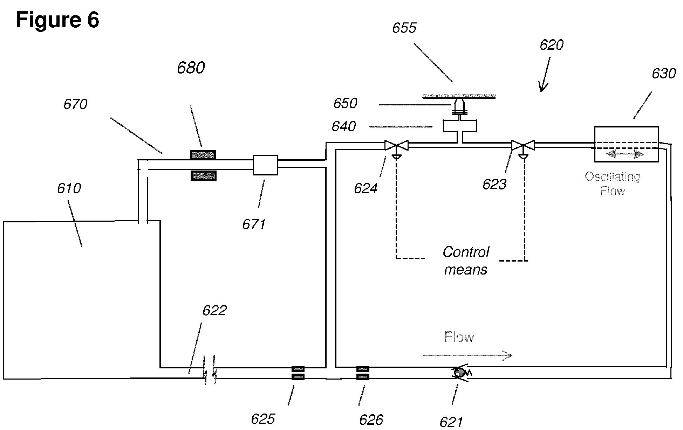

Figure 6 illustrates a further embodiment which is similar to the embodiment of figure 1. The vehicle supply system of figure 6 comprises a tank 610 and a loop circuit 620 which is in fluid communication with the tank 610 through a connecting tube 622. The tube 622 comprises a valve 625. Starting from the valve 625 and looking into the flow direction in the loop circuit 620, the loop circuit 620 comprises a valve 626, a check valve 621, a thermo-hydraulic unit 630, a first control valve 623, and a second control valve 624. Between the first and second control valves 623, 624 there is provided a buffer 640 with an injector 650 for injecting fluid into a fluid consuming device 655. Further, there is provided a return line 670 to deviate a portion of the flow from the main loop 620 back to the tank 610 in order to heat the fluid in the tank. This portion of the flow may be controlled by a control valve or valve 671, which is provided in the return line 670. An optional heating device 680 may be added on the return line 670, if the temperature of the return flow through return line 670 has to be further increased. The heating device 670 of the return line can be e.g. the exhaust pipe of an internal combustion engine, the internal combustion engine itself, a derivation or the main stream of the cooling circuit of an internal combustion engine or of a fuel cell, etc.

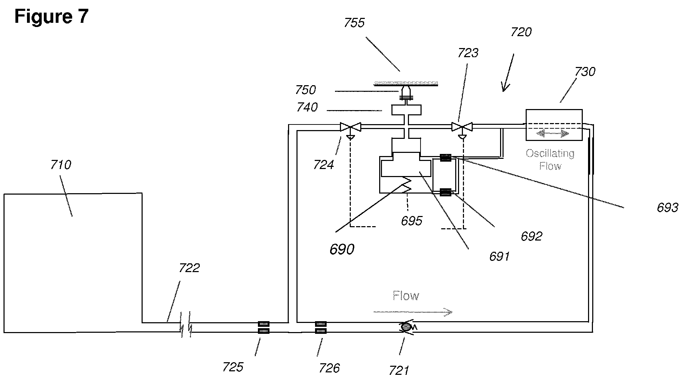

Figure 7 illustrates another embodiment of a vehicle supply system. The vehicle supply system comprises a tank 710 and a loop circuit 720 which are connected through a connecting tube 722. The connecting tube 722 is provided with a valve 725, and the loop circuit 720 is provided with a valve 726, a check valve 721, a thermo-hydraulic unit 730, and a buffer 740 between two control valves 723, 724. An injector 750 is connected to the buffer 740 for injecting fluid into a fluid consuming device 755. In addition to control valves 723 and 724, the regulation of the pressure inside buffer 740 can be further improved using a mechanical device such as an oscillating piston 691 which can compensate the fluctuations induced by the flow oscillations. The fluid coming out of the thermo-hydraulic unit 730, or from any other point in the loop circuit 120, can act on the oscillating piston 691 in combination with a spring 690. Valves 692 and 693 can control the flow, and the lengths of the lines can define the timing of the piston reaction. The opening of orifices 692 and 693, and the lengths of the lines can be adjusted so as to reinforce or decrease the pressure amplitude in the buffer 740. The sections above and below the piston 691 could also be fed from two different points of the loop circuit (not illustrated). Further, there may be provided control means 695 configured for controlling the positions of control valves 723, 724 as well as the position of the oscillating piston 691 or the stiffness of spring 690, e.g. with a non-illustrated actuator. The control means 695 may be mechanical, electromechanical, or electronic means. In order to limit pressure variations in the buffer 740, the movements of the valves 723, 724 may be synchronized during a certain period of time. E.g. valve 724 can be opened, while valve 723 is restricted so as to limit this pressure spike at the level of the buffer 740 during the flow oscillations. Also, the oscillating piston 691 can be used as a start-up system for quickly pressurizing the buffer 740 and the loop circuit 120 during start-up, while the heating device of the thermo-hydraulic unit 730 is warming up. To that end, a non-illustrated check valve preventing backflow from the loop circuit 720 to the tank may be added between the tank 710 and valve 725.

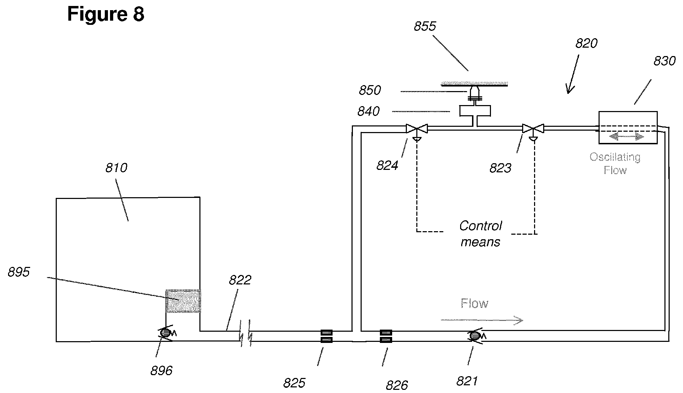

Figure 8 illustrates another embodiment of a vehicle supply system. The vehicle supply system comprises a tank 810 and a loop circuit 820 which are connected through a connecting tube 822. The connecting tube 822 is provided with a valve 825, and the loop circuit 820 is provided with a valve 826, a check valve 821, a thermo-hydraulic unit 830, and a buffer 840 between two control valves 823, 824. An injector 850 is connected to the buffer 840 for injecting fluid into a fluid consuming device 855. In this embodiment, the pressurization can be initiated by a pressurizing system 895 located in the tank 810 (illustrated) or downstream of the tank (not illustrated). Such a system 895 can be used to generate the initial pressure when the heating device of the thermo-hydraulic unit 830 has not reached a sufficiently high temperature. The pressurizing system 895 can be a pump, but a pump whose performance properties, especially durability and efficiency requirements can be considerably reduced in comparison with a conventional pump. This pump can be activated whenever the flow requirements are not met by the thermo-hydraulic unit 830. The buffer 840 is for instance fed through valves 825, 826 and the branch of the loop going through the thermo-hydraulic unit 830, with control valve 823 open and valve 824 closed. An additional check valve (not illustrated) may be arranged at the entry of buffer 840. The injector 850 may be replaced by a simple valve.

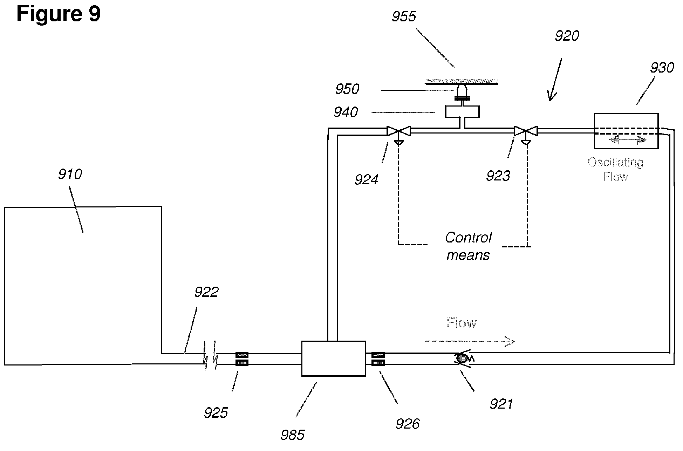

Figure 9 illustrates another embodiment of a vehicle supply system. The vehicle supply system comprises a tank 910 and a loop circuit 920 which are connected through a connecting tube 922. The connecting tube 922 is provided with a valve 925, and the loop circuit 920 is provided with a valve 926, a check valve 921, a thermo-hydraulic unit 930, and a buffer 940 between two control valves 923, 924. An injector 950 is connected to the buffer 940 for injecting fluid into a fluid consuming device 955. Further, there may be provided control means configured for controlling the positions of control valves 923, 924. A separator unit 985 is added between the connecting tube 922 and the loop circuit 920. The fluid delivered by the tank 910 is a NH₃/CO₂ aqueous mixture (aqua ammonia) coming from a chemical conversion unit. The separator unit 985 is configured to extract a CO₂-rich stream from a NH₃-rich solution. The CO₂-rich stream is eliminated, and the NH₃-rich solution constitutes the fluid flow of the supply loop.

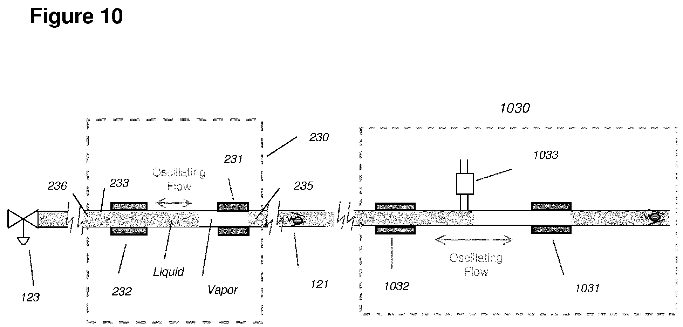

The separator unit 985 can be placed at the intersection of the main flow line and the return line as in figure 9, or can be located on the main flow line before the return line, i.e. in the connecting tube 922 (not illustrated), or after the return line, i.e. between the intersection and the thermo-hydraulic unit 930 (not illustrated). Alternatively, the separator unit can be combined in the thermo-hydraulic unit 930 similarly to the configuration of figure 2. This possibility is illustrated in figure 10. Figure 10 shows the implementation of the separator unit 1030 as a first stage of the thermo-hydraulic unit. The thermo-hydraulic oscillation is obtained similarly as in the pumping stage 230. The fluid entering the separator unit 1030 is a NH₃CO₂ aqueous mixture. When the mixture is heated, the CO₂ escapes through the gas release valve 1033. The gas release valve 1033 is configured such that only gas can escape from the supply line, and no liquid can escape. In addition, neither gas nor liquid can enter the supply line through the release valve 1033. The liquid phase which is transferred to the pumping stage 230 is the NH₃-rich solution. In a further developed (not illustrated) embodiment the separator stage 1030 could function both as a separator stage and as a pumping stage, so that pumping stage 230 may be omitted in figure 10.

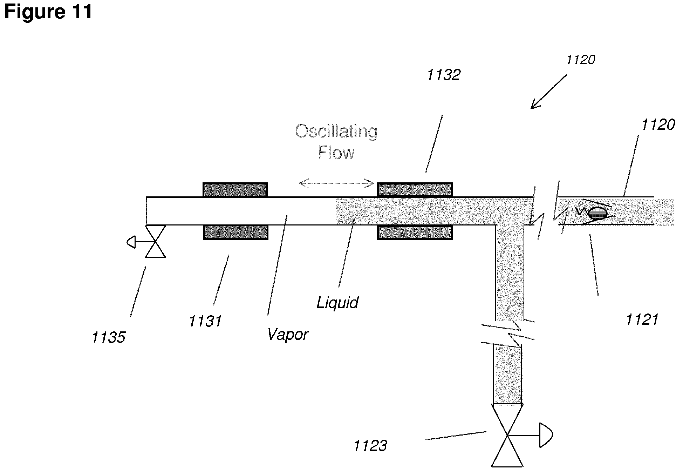

Figure 11 illustrates another embodiment of a supply circuit for a vehicle supply system. The supply circuit 1120 is meant for being connected to a tank (not illustrated) through a connecting tube 1122 in which a check valve 1121 is arranged. The supply circuit 1120 is provided with a control valve 1123 leading to a buffer (not illustrated), a thermo-hydraulic unit 1130, and a filling draining valve 1135. An injector (not illustrated) may be connected to the buffer for injecting fluid into a fluid consuming device. In this embodiment the buffer is located upstream of the thermo-hydraulic unit 1130, and the cooling device 1132 is located upstream of the heating device 1131.

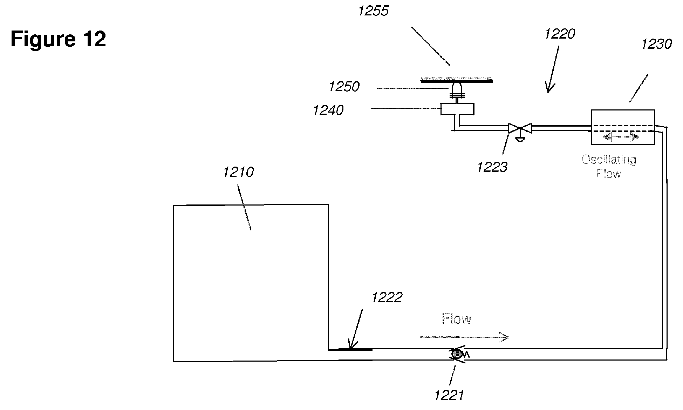

Figure 12 illustrates yet another embodiment of a vehicle supply system comprises a tank 1210 and a supply circuit 1220 in fluid communication with the tank 1210. A fluid is contained in the tank 1210. The tank can be e.g. a buffer containing aqua-ammonia, a chemical conversion unit producing aqua-ammonia, a gasoline or diesel tank, a urea tank, etc. The fluid from the tank is fed, e.g. by gravity, to the supply circuit 1220. The supply circuit 1220 comprises a thermo-hydraulic unit 1230 configured for causing an oscillating flow due to the action of the thermo-hydraulic unit 1230. The thermo-hydraulic unit 1230 comprises a heating device and a cooling device for causing the oscillating flow. The heating device can be e.g. an exhaust pipe of an internal combustion engine, the internal combustion engine itself, a derivation or the main stream of the cooling circuit of an internal combustion engine or of a fuel cell, etc. The cooling device of the thermo-hydraulic unit can be e.g. the environment, or a derivation or the main stream of an air conditioning system. The thermo-hydraulic unit may be any one of the embodiments for the thermo-hydraulic unit discussed above when referring to figures 2A-C, figure 3 and figure 4. The fluid vaporizing in the heating device 1230 is forced to flow towards the cooling device due to the presence of a check valve 1221 in the supply circuit 1220, between a connection tube 1222 and the thermo-hydraulic unit 1230. The vaporization will pressurize the fluid in the buffer 1240. When the fluid condenses in the cooling device a relative vacuum is generated in the heating device, so that fluid from the tank 1210 is sucked again in the supply circuit 1220. In order to be able to control the pressure inside the buffer 1240, there may be provided a control valve 1223 between the thermo-hydraulic unit 1230 and the buffer 1240. The buffer 1240 is connected to an injector 1250 for injecting pressurized fluid in a fluid consuming device 1255. The fluid consuming device 1255 can be e.g. an exhaust pipe, an internal combustion engine, a fuel cell, a chemical convertor or a buffer. The fluid can be e.g. aqua-ammonia, effluents of urea hydrolysis, gasoline, or other fuels.

In a possible implementation of the embodiments of figures 1,5,6, 7, 8, 9, 11 and 12, the hot members, i.e. the thermo-hydraulic unit, the buffer, the injector, any control valves for controlling the pressure in the buffer, and tube parts connecting those members may be integrated in a single component, constituted for instance of a metal part; while all the other members may be integrated in a plastic part. The check valve could be built e.g. with an elastic membrane in a plastic body.

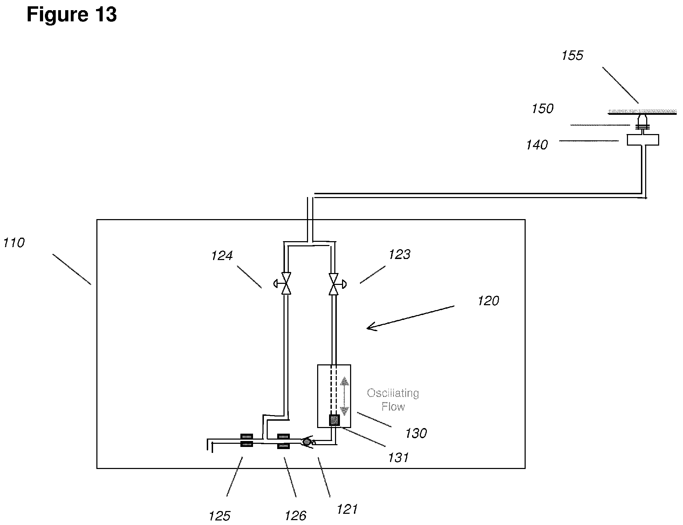

As illustrated in the particular embodiment of figure 13, the complete loop circuit 120 including the thermo-hydraulic unit 130 can be placed (i.e. mounted) within the tank 110. In this embodiment, the heating device 131 of the thermo-hydraulic unit 130 can be, for example, a resistive heater, and the internal environment of the tank 110 can be used for cooling. In another particular embodiment, the thermo-hydraulic unit 130 can be a module adapted to be mounted on the wall of the tank 110.

In another embodiment, each valve (125 and 126, 525 and 526, 625 and 626, 725 and 726, 825 and 826, 925 and 926) can be replaced by an orifice or a combination of a valve in series with an orifice.

Whilst the principles of the invention have been set out above in connection with specific embodiments, it is to be understood that this description is merely made by way of example and not as a limitation of the scope of protection which is determined by the appended claims.

## Claims

1. A vehicle supply system, comprising:
a reservoir (110) for storing a fluid; and
a supply circuit (120) arranged for being in fluid communication with said reservoir; **characterised in that** said supply circuit comprises a thermo-hydraulic section (130) configured for generating a temperature difference between a first portion and a second portion of said thermo-hydraulic section, said temperature difference being capable of causing evaporation in said first portion and of causing condensation in said second portion such that an oscillating flow is generated between said first portion and said second portion;
wherein said supply circuit is configured for using said oscillating flow for sucking fluid from said reservoir.

2. The vehicle supply system of claim 1, wherein the supply circuit comprises a valve (121) between an inlet (122) of the supply circuit and the thermo-hydraulic section (130), said valve being configured for blocking a flow from the thermo-hydraulic section to the reservoir and for allowing a flow from the reservoir to the thermo-hydraulic section.

3. The vehicle supply system of claim 1 or 2, wherein the supply circuit comprises a buffer (140) for storing the fluid in the supply circuit.

4. The vehicle supply system of claim 3, wherein the supply circuit comprises at least one control valve (123) for controlling the pressure in the buffer.

5. The vehicle supply system of any one of the previous claims, further comprising an injector (150) configured for injecting or spraying pressurized fluid from the supply circuit into a fluid consuming device.

6. The vehicle supply system of any one of the previous claims, wherein the thermo-hydraulic section comprise any one or more of the following components for heating the first portion:
exhaust pipe, engine block, engine cooling system, fuel cell cooling system.

7. The vehicle supply system of any one of the previous claims, wherein the thermo-hydraulic section comprise any one or more of the following components for cooling the second portion: a cooling component using air from the environment, air conditioning system.

8. The vehicle supply system of any one of the previous claims, wherein the thermo-hydraulic section comprises a tube (233) with an inlet (235) for receiving fluid from the reservoir, wherein a heating device (231) is arranged for heating the tube at a first location for evaporating said fluid at said first location, and a cooling device (232) is arranged for cooling the tube at a second location for condensing said evaporated fluid at said second location.

9. The vehicle supply system of any one of the claims 1-6, wherein the thermo-hydraulic section comprises a chamber (333) and a tube section (334), said chamber being in fluid communication with a first end (337) and a second end (338) of the tube section, wherein the thermo-hydraulic section is configured for generating a temperature difference between a first portion of the tube section and a second portion of the tube section, said temperature difference being capable of causing evaporation in said first portion and of causing condensation in said second portion.

10. The vehicle supply system of any one of the previous claims, wherein the supply circuit comprises a loop circuit.

11. The vehicle supply system of claim 4 and 10, wherein said loop circuit comprises the first control valve (123) upstream of the buffer and a second control valve downstream (124) of the buffer, said first and said second control valves being configured for controlling the pressure in said buffer.

12. The vehicle supply system of claim 10 or 11, wherein the loop circuit comprises a valve (126) for controlling the flow in the loop circuit.

13. The vehicle supply system of any one of the previous claims, wherein the reservoir is connected to the supply circuit via a connecting tube comprising a valve (125) for controlling the flow to the supply circuit.

14. The vehicle supply system of any one of the previous claims, wherein the reservoir is any one of the following: a buffer reservoir, a tank, a decomposition unit, a buffer containing aqua-ammonia, a chemical conversion unit producing aqua-ammonia, a gasoline or diesel tank, a ammonia precursor tank.

15. Use of a thermo-hydraulic section in a vehicle supply system according to any one of the previous claims.

16. A thermo-hydraulic section for use in a vehicle supply system comprising a tube (233) with an inlet (235) for receiving fluid from a reservoir, wherein a heating device (231) is arranged for heating the tube at a first location for evaporating said fluid at said first location, and a cooling device (232) is arranged for cooling the tube at a second location for condensing said evaporated fluid at said second location.

17. A thermo-hydraulic section for use in a vehicle supply system comprising a chamber (333) and at least one tube section (334), said chamber being in fluid communication with a first end (337) and a second end (338) of each tube section, wherein the thermo-hydraulic section is configured for generating a temperature difference between a first portion of each tube section and a second portion of each tube section, said temperature difference being capable of causing evaporation in said first portion and of causing condensation in said second portion.

## Patentansprüche

1. Fahrzeugversorgungssystem, aufweisend:
ein Reservoir (110) zum Speichern eines Fluids; und
ein Versorgungskreislauf (120), welcher angeordnet ist, um mit dem Reservoir in Fluidverbindung zu stehen;
**dadurch gekennzeichnet, dass**
der Versorgungskreislauf eine thermo-hydraulische Sektion (130) zum Erzeugen einer Temperaturdifferenz zwischen einem ersten Teil und einem zweiten Teil der thermo-hydraulischen Sektion aufweist, wobei die Temperaturdifferenz eine Verdampfung in dem ersten Teil und eine Kondensation in dem zweiten Teil verursacht, so dass eine oszillierende Strömung zwischen dem ersten Teil und dem zweiten Teil erzeugt wird;
wobei der Versorgungskreislauf dazu ausgeführt ist, die oszillierende Strömung zum Ansaugen von Fluid aus dem Reservoir zu verwenden.

2. Fahrzeugversorgungssystem nach Anspruch 1, wobei der Versorgungskreislauf ein Ventil (121) zwischen einem Einlass (122) des Versorgungskreislaufs und der thermo-hydraulischen Sektion (130) aufweist, wobei das Ventil zum Blockieren einer Strömung von der thermo-hydraulischen Sektion zum Reservoir und zum Ermöglichen einer Strömung von dem Reservoir zu der thermo-hydraulischen Sektion ausgeführt ist.

3. Fahrzeugversorgungssystem nach Anspruch 1 oder 2, wobei der Versorgungskreislauf einen Puffer (140) zum Speichern des Fluids in dem Versorgungskreislauf aufweist.

4. Fahrzeugversorgungssystem nach Anspruch 3, wobei der Versorgungskreislauf zumindest ein Steuerventil (123) zum Steuern des Drucks in dem Puffer aufweist.

5. Fahrzeugversorgungssystem nach einem der vorhergehenden Ansprüche, ferner aufweisend:
einen Injektor (150), der zum Einspritzen oder Sprühen von unter Druck stehendem Fluid aus dem Versorgungskreislauf in einen Fluidverbraucher ausgeführt ist.

6. Fahrzeugversorgungssystem nach einem der vorhergehenden Ansprüche, wobei die thermo-hydraulische Sektion eine oder mehrere der folgenden Komponenten zum Erwärmen des ersten Teils aufweist: Auslassrohr, Motorblock, Motorkühlsystem, Brennstoffzellenkühlsystem.

7. Fahrzeugversorgungssystem nach einem der vorhergehenden Ansprüche, wobei die thermo-hydraulische Sektion eine oder mehrere der folgenden Komponenten zum Kühlen des zweiten Teils aufweist: eine Kühlkomponente, welche Luft aus der Umgebung verwendet, eine Klimaanlage.

8. Fahrzeugversorgungssystem nach einem der vorhergehenden Ansprüche, wobei die thermo-hydraulische Sektion ein Rohr (233) mit einem Einlass (235) aufweist, um Fluid aus dem Reservoir aufzunehmen, wobei eine Heizeinrichtung (231) angeordnet ist zum Erwärmen des Rohrs an einer ersten Stelle, um das Fluid an der ersten Stelle zu verdampfen, und wobei eine Kühleinrichtung (232) angeordnet ist zum Kühlen des Rohrs an einer zweiten Stelle, um das verdampfte Fluid an der zweiten Stelle zu kondensieren.

9. Fahrzeugversorgungssystem nach einem der Ansprüche 1-6, wobei die thermo-hydraulische Sektion eine Kammer (333) und einen Rohrabschnitt (334) aufweist, wobei die Kammer mit einem ersten Ende (337) und einem zweiten Ende (338) des Rohrabschnitts in Fluidverbindung steht, wobei die thermo-hydraulische Sektion zum Erzeugen einer Temperaturdifferenz zwischen einem ersten Teil des Rohrabschnitts und einen zweiten Teil des Rohrabschnitts ausgeführt ist, wobei die Temperaturdifferenz eine Verdampfung in dem ersten Teil und eine Kondensation in dem zweiten Teil verursacht.

10. Fahrzeugversorgungssystem nach einem der vorhergehenden Ansprüche, wobei der Versorgungskreislauf einen Ringkreislauf aufweist.

11. Fahrzeugversorgungssystem nach Anspruch 4 und 10, wobei der Ringkreislauf das erste Steuerventil (123) stromauf des Puffers und ein zweites Steuerventil stromab (124) des Puffers aufweist, wobei das erste und das zweite Steuerventil zum Steuern des Drucks in dem Puffer ausgeführt sind.

12. Fahrzeugversorgungssystem nach Anspruch 10 oder 11, wobei der Ringkreislauf ein Ventil (126) zum Steuern der Strömung in dem Ringkreislauf aufweist.

13. Fahrzeugversorgungssystem nach einem der vorhergehenden Ansprüche, wobei das Reservoir mit dem Versorgungskreislauf über ein Verbindungsrohr verbunden ist, welches ein Ventil (125) zum Steuern der Strömung in den Versorgungskreislauf aufweist.

14. Fahrzeugversorgungssystem nach einem der vorhergehenden Ansprüche, wobei das Reservoir eines der folgenden ist: ein Pufferreservoir, ein Tank, eine Zersetzungseinheit, ein Puffer mit Ammoniakwasser, eine chemische Umwandlungseinheit, die Ammoniakwasser produziert, ein Benzin- oder Dieseltank, ein Ammoniak-Vorläufer Tank.

15. Verwendung eines thermo-hydraulischen Abschnitts in einem Fahrzeugversorgungssystem nach einem der vorhergehenden Ansprüche.

16. Thermo-hydraulische Sektion zur Verwendung in einem Fahrzeugversorgungssystem, welches ein Rohr (233) mit einen Einlass (235) zum Aufnehmen von Fluid aus einem Reservoir aufweist, wobei eine Heizeinrichtung (231) angeordnet ist zum Erwärmen des Rohrs an einer ersten Stelle, um das Fluid an der ersten Stelle zu verdampfen, und wobei eine Kühleinrichtung (232) angeordnet ist zum Kühlen des Rohrs an einer zweiten Stelle, um das verdampfte Fluid an der zweiten Stelle zu kondensieren.

17. Thermo-hydraulische Sektion zur Verwendung in einem Fahrzeugversorgungssystem, welches eine Kammer (333) und zumindest einen Rohrabschnitt (334) aufweist, wobei die Kammer mit einem ersten Ende (337) und einem zweiten Ende (338) jedes Rohrabschnitts in Fluidverbindung steht, wobei die thermo-hydraulische Sektion zum Erzeugen einer Temperaturdifferenz zwischen einem ersten Teil jedes Rohrabschnitts und einen zweiten Teil jedes Rohrabschnitts ausgeführt ist, wobei die Temperaturdifferenz eine Verdampfung in dem ersten Teil und eine Kondensation in dem zweiten Teil verursacht.

## Revendications

1. Système d'alimentation de véhicule, comprenant :
un réceptacle d'accumulation (110) servant à stocker un fluide ; et
un circuit d'alimentation (120) prévu de façon à se trouver en communication fluidique avec ledit réceptacle d'accumulation ;
**caractérisé en ce que**
ledit circuit d'alimentation comprend une section thermo-hydraulique (130) configurée pour générer une différence de température entre une première partie et une seconde partie de ladite section thermo-hydraulique, ladite différence de température pouvant provoquer une évaporation dans ladite première partie et provoquer une condensation dans ladite seconde partie de telle sorte qu'un écoulement oscillatoire soit généré entre ladite première partie et ladite seconde partie ;
ledit circuit d'alimentation étant configuré pour utiliser ledit écoulement oscillatoire afin d'aspirer du fluide à partir dudit réceptacle d'accumulation.

2. Système d'alimentation de véhicule selon la revendication 1, dans lequel le circuit d'alimentation comprend une valve (121) entre une entrée (122) du circuit d'alimentation et la section thermo-hydraulique (130), ladite valve étant configurée pour bloquer un écoulement allant de la section thermo-hydraulique au réceptacle d'accumulation et pour permettre un écoulement allant du réceptacle d'accumulation à la section thermo-hydraulique.

3. Système d'alimentation de véhicule selon la revendication 1 ou 2, dans lequel le circuit d'alimentation comprend un élément de stockage intermédiaire (140) servant à stocker le fluide dans le circuit d'alimentation.

4. Système d'alimentation de véhicule selon la revendication 3, dans lequel le circuit d'alimentation comprend au moins une valve de régulation (123) servant à réguler la pression dans l'élément de stockage intermédiaire.

5. Système d'alimentation de véhicule selon l'une quelconque des revendications précédentes, comprenant en outre un injecteur (150) configuré pour injecter ou pulvériser du fluide sous pression à partir du circuit d'alimentation dans un dispositif consommateur de fluide.

6. Système d'alimentation de véhicule selon l'une quelconque des revendications précédentes, dans lequel la section thermo-hydraulique comprend un ou plusieurs composants quelconque(s) parmi les composants suivants pour le chauffage de la première partie : un tuyau d'échappement, un bloc moteur, un système de refroidissement du moteur, un système de refroidissement de pile à combustible.

7. Système d'alimentation de véhicule selon l'une quelconque des revendications précédentes, dans lequel la section thermo-hydraulique comprend un ou plusieurs composants quelconque(s) parmi les composants suivants pour le refroidissement de la seconde partie : un composant de refroidissement utilisant l'air de l'environnement, un système de climatisation.

8. Système d'alimentation de véhicule selon l'une quelconque des revendications précédentes, dans lequel la section thermo-hydraulique comprend un tube (233) avec une entrée (235) destinée à recevoir du fluide à partir du réceptacle d'accumulation, dans lequel un dispositif de chauffage (231) est prévu pour chauffer le tube à un premier emplacement de façon à évaporer ledit fluide au niveau dudit premier emplacement, et un dispositif de refroidissement (232) est prévu pour refroidir le tube à un second emplacement de façon à condenser ledit fluide évaporé au niveau dudit second emplacement.

9. Système d'alimentation de véhicule selon l'une quelconque des revendications 1 à 6, dans lequel la section thermo-hydraulique comprend une chambre (333) et une section tubulaire (334), ladite chambre se trouvant en communication fluidique avec une première extrémité (337) et une seconde extrémité (338) de la section tubulaire, dans lequel la section thermo-hydraulique est configurée pour générer une différence de température entre une première partie de la section tubulaire et une seconde partie de la section tubulaire, ladite différence de température pouvant provoquer une évaporation dans ladite première partie et provoquer une condensation dans ladite seconde partie.

10. Système d'alimentation de véhicule selon l'une quelconque des revendications précédentes, dans lequel le circuit d'alimentation comprend un circuit en boucle.

11. Système d'alimentation de véhicule selon les revendications 4 et 10, dans lequel ledit circuit en boucle comprend la première valve de régulation (123) en amont de l'élément de stockage intermédiaire et une seconde valve de régulation (124) en aval de l'élément de stockage intermédiaire, lesdites première et seconde valves de régulation étant configurées pour réguler la pression dans ledit élément de stockage intermédiaire.

12. Système d'alimentation de véhicule selon la revendication 10 ou 11, dans lequel le circuit en boucle comprend une valve (126) servant à réguler l'écoulement dans le circuit en boucle.

13. Système d'alimentation de véhicule selon l'une quelconque des revendications précédentes, dans lequel le réceptacle d'accumulation est raccordé au circuit d'alimentation par le biais d'un tube de raccordement comprenant une valve (125) servant à réguler l'écoulement en direction du circuit d'alimentation.

14. Système d'alimentation de véhicule selon l'une quelconque des revendications précédentes, dans lequel le réceptacle d'accumulation est l'un quelconque des dispositifs suivants : un réceptacle d'accumulation de stockage intermédiaire, un réservoir, une unité de décomposition, un élément de stockage intermédiaire contenant de l'ammoniaque, une unité de conversion chimique produisant de l'ammoniaque, un réservoir à essence ou à diesel, un réservoir à précurseur d'ammoniac.

15. Utilisation d'une section thermo-hydraulique dans un système d'alimentation de véhicule selon l'une quelconque des revendications précédentes.

16. Section thermo-hydraulique destinée à être utilisée dans un système d'alimentation de véhicule comprenant un tube (233) avec une entrée (235) destinée à recevoir du fluide à partir d'un réceptacle d'accumulation, dans laquelle un dispositif de chauffage (231) est prévu pour chauffer le tube à un premier emplacement de façon à évaporer ledit fluide au niveau dudit premier emplacement, et un dispositif de refroidissement (232) est prévu pour refroidir le tube à un second emplacement de façon à condenser ledit fluide évaporé au niveau dudit second emplacement.

17. Section thermo-hydraulique destinée à être utilisée dans un système d'alimentation de véhicule comprenant une chambre (333) et au moins une section tubulaire (334), ladite chambre se trouvant en communication fluidique avec une première extrémité (337) et une seconde extrémité (338) de chaque section tubulaire, la section thermo-hydraulique étant configurée pour générer une différence de température entre une première partie de chaque section tubulaire et une seconde partie de chaque section tubulaire, ladite différence de température pouvant provoquer une évaporation dans ladite première partie et provoquer une condensation dans ladite seconde partie.
